# EUROPÄISCHE PATENTSCHRIFT

(11) **EP 0 446 475 B1**
(45) Veröffentlichungstag und Bekanntmachung des Hinweises auf die Patenterteilung: **01.02.1995**
(21) Anmeldenummer: 90125156.1
(22) Anmeldetag: 21.12.1990
(51) Int. Cl.: H02G 3/04

(54) **Kabelkanal, wie Brüstungskanal, Geräteeinbaukanal od.dgl.**
Cable channel, such as wall trunking, apparatus moulding channel or similar
Canal pour câbles, en particulier goulotte de paroi, canal pour appareillages ou similaires

(30) Priorität: 07.03.1990 DE 4007165
(43) Veröffentlichungstag der Anmeldung: 18.09.1991
(73) Patentinhaber: Hermann Kleinhuis GmbH. & Co. KG, D-58507 Lüdenscheid (DE)
(72) Erfinder: Kleinkorres, Uwe, W-5802 Wetter 1 (DE)
(74) Vertreter: Buse, Karl Georg, Dipl.-Phys.

(56) Entgegenhaltungen:
- DE-U- 8 701 537
- GB-A- 1 436 380

## Beschreibung

Die Erfindung bezieht sich auf einen Kabelkanal, wie Brüstungskanal, Geräteeinbaukanal od.dgl., dessen Gehäuse an einer Seite eine durch einen Deckel verschließbare Öffnung und dessen wenigstens eine Seitenwand und dessen Bodenaußenseite durchlaufende Rinnen mit je einer Rinnenöffnung haben, deren Begrenzungswandungen bereichsweise mit Kupplungsvorsprüngen ausgerüstet sind, wobei an den Kupplungsvorsprüngen der Rinnen Gegenkupplungen eines Halters für Profile anbringbar sind.

Derartige Kabelkanäle sind durch die GB-A 1 436 380 bekanntgeworden. Der Kabelkanal nach dieser Druckschrift hat an seiner Bodenaußenseite durchlaufende Rinnen mit je einer Rinnenöffnung, deren Begrenzungswandungen mit den vorderen freien Enden der Seitenwandungen eines U-förmigen Trägers zusammenwirken. Dieser ist seinerseits mittels Schrauben od.dgl. an einer Wand festgelegt. An einer der Seitenwandungen des bekannten Kabelkanals sind ebenfalls durchlaufende Rinnen mit Rinnenöffnungen angeordnet, deren Begrenzungswandungen mit Kupplungsvorsprüngen ausgerüstet sind, die die freien Enden eines Trägers aufnehmen. Mit dem plattenförmigen Grundkörper dieses Trägers können Kabelführungen verbunden werden. In diesen Kabelführungen können Rohre, Leitungen, Kabel od.dgl. untergebracht werden. Die Anbringung eines Halters für Konvektionsgitterprofile ist in dieser Entgegenhaltung weder nahegelegt noch offenbart.

Darüber hinaus sind Kabelkanäle der eingangs näher gekennzeichneten Art in zahlreichen Ausführungsformen bekannt. Durch die öffnung an der einen Seite des Gehäuses der bekannten Kabelkanäle werden in den durchlaufenden Hohlraum des Kabelkanals nicht nur elektrische Leitungen, Kabel od.dgl. eingeführt, sondern auch elektrische Geräte, z.B. Installationsgeräte. Nach dem Einbringen der genannten Teile kann die Öffnung in dem Gehäuse des Kabelkanals durch Aufsetzen des Deckels oder durch sein Überführen in seine zweite Endlage verschlossen werden. Dabei kann ein solcher Deckel auch Durchbrüche, Ausnehmungen od.dgl. aufweisen. Diese dienen zur Zugänglichmachung der im Hohlraum des Kabelkanals angeordneten elektrischen Installationsgeräte.

Die an der einen Seitenwand bekannter Kabelkanäle angeordnete durchlaufende Rinne mit einer nach außen hin offenen Rinnenöffnung dient einmal zum Zusammenkuppeln mit anderen Kabelkanälen, beispielsweise um zwei oder auch mehrere Kabelkanäle zur einer Kabelkanaleinheit zusammenzufassen. Um dabei das Zusammenfügen solcher Kabelkanäle zu der gewünschten Kabelkanaleinheit zu erleichtern, sind die Begrenzungswandungen der Rinnenöffnung mindestens bereichsweise mit Kupplungsvorsprüngen ausgerüstet. Mit diesen arbeiten die Kupplungen der zusammenzufügenden Kabelkanäle oder die von Verbindern zusammen.

Man hat auch bereits vorgeschlagen, die Kupplungsvorsprünge der Rinnenöffnung eines Kabelkanals wahlweise zum Zusammenwirken mit einer Verrastung eines Elektrogerätes eines Elektroinstallationsgerätes od.dgl., oder aber zum Zusammenwirken eines Verbindungselementes dienen zu lassen, welches seinerseits lösbar mit dem Elektrogerät bzw. dem Elektroinstallationsgerät verbindbar ist.

Die Erfindung geht von der Erkenntnis aus, daß man die Kupplungsvorsprünge an den Begrenzungswandungen einer Rinnenöffnung auch zum lösbaren Verbinden mit anderen als den bisher gebräuchlichen, an sich bekannten Einrichtungen heranziehen kann.

Demgemäß liegt der Erfindung die Aufgabe zugrunde, Kabelkanäle der eingangs näher gekennzeichneten Art so zu gestalten, daß man im Bereich der Außenfläche Anbringungsmöglichkeiten für Halter von Konvektionsgitterprofilen schafft. Dabei sollen derartige Halter von Konvektionsgitterprofilen wahlweise vom Benutzer sowohl an den Seitenwandungen des Kabelkanals als auch an der Außenseite seines Bodens angebracht werden können. Die Vorkehrungen sollen dabei so getroffen werden, daß eine wirtschaftliche Herstellung sowohl des Kabelkanals als auch der damit zusammenwirkenden Halter für Konvektionsgitterprofile erzielt wird.

Zur Lösung dieser Aufgabe wird erfindungsgemäß vorgeschlagen, daß die Profile Konvektionsgitterprofile sind, und daß der Halter wabenförmig gestaltet ist, und daß jede Wabe aus Wandungen und Querwandungen besteht, die paarweise mit Abstand voneinander angeordnet sind, jeweils einen Raum umgrenzen, und von denen der einen Wandung des Wandungspaares die Gegenkupplungen und der einen Querwandung des Querwandungspaares wenigstens ein Aufnahmeraum für ein Konvektionsgitterprofil zugeordnet ist.

Durch die erfindungsgemäße Ausbildung des Kabelkanals wird zunächst gewährleistet, daß ein großer durchlaufender Hohlraum nach wie vor zur Unterbringung von Elektromaterial oder Elektrogeräten benutzt werden kann. Es ist nach wie vor das Einbringen der genannten Teile in diesen Hohlraum des Kabelkanals bei freigelegter Öffnung ermöglicht. Nach dem Einbringen der Teile kann die öffnung durch den Deckel in bekannter Weise verschlossen werden. Darüber hinaus hat man nunmehr aber auch die Möglichkeit, an den Außenflächen eines solchen Kabelkanals einen Halter für Konvektionsgitterprofile anzubringen. Da es sich um Kabelkanäle handelt, bei denen wenigstens eine Seitenwand, aber auch die Bodenaußenseite durchlaufende Rinnen mit je einer Rinnenöffnung haben, hat es der Benutzer in der Hand, den Halter für die Konvektionsgitterprofile wahlweise mit einer der Seitenwände des Kabelkanals und/oder mit seinem Boden zu verbinden. Es ist daher eine Anpassung an die jeweils vorhandenen räumlichen Verhältnisse möglich.

Die Anzahl der Waben, die der Halter für die Konvektionsgitterprofile aufweist, kann dabei variieren. So ist es beispielsweise möglich, einen Halter drei Waben aufweisen zu lassen.

Darüber hinaus wird aber erfindungsgemäß vorgeschlagen, die wirksame Länge des Halters für die Konvektionsgitterprofile durch Abtrennen einer oder mehrerer Waben veränderbar zu halten. Eine solche Lösung hat den Vorteil, daß man mit einem einzigen Herstellungswerkzeug für die Fertigung der Halter auskommt, daß man dabei aber trotzdem eine Veränderung der wirksamen Länge des Halters vornehmen kann, und zwar durch Abtrennen einer oder mehrerer Waben von dem Halter.

Das Abtrennen einer oder mehrerer Waben des Halters kann in unterschiedlicher Weise erfolgen. So ist es beispielsweise möglich, die Waben des Halters über Sollbruchstellen miteinander zu verbinden. In diesem Falle geschieht das Abtrennen einer Wabe durch Abbrechen. Es ist aber auch möglich, im Bereich der Waben Markierungen, wie Schneidmarkierungen, vorzunehmen. Diese dienen zum Ansetzen eines Trennwerkzeuges.

Es empfiehlt sich, die Gegenkupplungen des Halters im Bereich des vorderen Endes von zwei parallel und im Abstand voneinander angeordneten Armen anzuordnen, deren rückwärtige Enden in die benachbarte Wandung des Halters übergehen. Bei einer solchen Ausgestaltung werden die Gegenkupplungen und die Arme dem Halter zunächst unmittelbar angeformt. Dieser einstückige Halter ist aus einem der in der Elektroindustrie gebräuchlichen Kunststoffe hergestellt.

Hinsichtlich der Ausbildungen der Gegenkupplungen an den Armen des Halters ergeben sich mehrere Möglichkeiten. Nach einem ersten Vorschlag der Erfindung sind die Gegenkupplungen der Arme untereinander gleichgestaltet, bevorzugt wird jedoch eine Ausführungsform, bei der die Arme des Halters an ihrem vorderen freien Ende unterschiedlich gestaltete Gegenkupplungen aufweisen. In diesem Falle ist die Gegenkupplung des einen Armes als Haltehaken mit scharfkantigem Profil ausgebildet, während die andere Gegenkupplung in ein abgerundetes Ende ausläuft. Bei dieser Ausführungsform wird der Halter derart mit dem Kabelkanal verbunden, daß die scharfkantigen Gegenkupplungen an derjenigen Seite angeordnet sind, von der äußere Kräfte auf die Konvektionsgitterprofile bzw. auf den diese tragenden Halter einwirken können. Die Gegenkupplung mit dem abgerundeten Ende wird dagegen an derjenigen Seite angebracht, bei der solche Kräfte auf den Halter einwirken, die ein Lösen des Halters von dem Kabelkanal bewirken sollen.

Nach einem weiteren Vorschlag der Erfindung sind an der oberen Querwand jeder Wabe des Halters zwei im Abstand voneinander liegende und nach außen weisende Verlängerungen angeordnet. Diese schließen einen Aufnahmeraum zwischen sich ein, durch dessen Einführungsöffnung das Konvektionsgitterprofil bereichsweise in den Aufnahmeraum einführbar ist.

Es empfiehlt sich, die Verlängerung eine quer zur liegende Abwinklung aufweisen zu lassen, die ihrerseits in einen senkrecht zur oberen Querwand der Wabe verlaufenden vorderen Teil übergeht, der in einer Abstützfläche für das Konvektionsgitterprofil ausläuft.

Zweckmäßig ist es, die Begrenzungswandungen des Aufnahmeraumes Vertiefungen und Vorsprünge aufweisen zu lassen, die mit einem Haltebereich des Konvektionsgitterprofiles zusammenwirken. Dabei sollte man an der einen Begrenzungswand des Aufnahmeraumes die Vorsprünge anbringen, beispielsweise drei untereinander gleichgestaltete und im Abstand voneinander angeordnete. Durch diese Vorsprünge wird ein punktweises Anliegen der Begrenzungswandungen an dem Haltebereich des Konvektionsgitterprofiles gewährleistet. Die Vertiefung in der gegenüberliegenden anderen Begrenzungswand des Aufnahmeraumes kann mit einem Vorsprung des Haltebereiches des Konvektionsgitterprofiles zusammenwirken.

Nach einem anderen Vorschlag der Erfindung kann man an dem mit dem Kabelkanal verbundenen Halter für Konvektionsgitterprofile noch einen oder mehrere weitere Halter ankuppeln, die vorzugsweise untereinander gleichgestaltet sind. In diesem Falle empfiehlt es sich, den Halter an seiner den Armen mit den Gegenkupplungen gegenüberliegenden Seite Verbindungsarme mit Haken aufweisen zu lassen; diese dienen dem Zusammenkuppeln des einen Halters mit einem weiteren Halter.

Dabei empfiehlt es sich, die Haltereinrichtungen zum Erzielen eines Schutzes gegen seitliches Verschieben aufweisen zu lassen. Ein solcher Verschiebeschutz kann z.B. aus Verbindungsteilen bestehen, die jeweils zwischen einer Wandung und dem Verbindungsarm eines Halters angeordnet sind, und gegen die sich beim Zusammenkuppeln zweier Halter Seitenbereiche der Gegenkupplungen des zweiten Halters anlegen. Dieses Anlegen der Seitenbereiche erfolgt dabei zweckmäßig an unterschiedlichen Seiten der Verbindungswandteile. Diese Einrichtungen zur Erzielung eines Schutzes gegen seitliches Verschieben werden bei der Herstellung des Halters mit angeformt, so daß dieser nach wie vor einstückig aus einem der in der Elektroindustrie gebräuchlichen Isolierstoffe gefertigt ist.

Das Konvektionsgitterprofil ist ein einstückiger metallischer Körper, insbesondere ein Aluminiumkörper. Dieser hat einen Haltebereich zu seiner Festlegung am Halter. An diesen schließt sich ein geneigt zu ihm verlaufender Mittelbereich an, der seinerseits in einen senkrecht zum Haltebereich liegenden Abstützbereich übergeht. Das äußerste freie Ende des Abstützbereiches kann dabei um 90° in Richtung auf den Halter abgewinkelt werden.

An der Innenfläche des Mittelbereiches des Konvektionsgitterprofiles sind Vorsprünge angeformt, die einen Aufnahmeraum zwischen sich einschließen, der eine Einführungsöffnung aufweist. Dieser Aufnahmeraum dient zur Unterbringung von Verbindungskörpern, beispielsweise von Spannstiften, die eine Verbindung von mehreren Konvektionsgitterprofilen zulassen. Dabei können grundsätzlich bekannte Verbindungskörper eingesetzt werden. Diese können durch die Einführungsöffnung in den Einführungsraum eingebracht werden. Dabei hat der Aufnahmeraum vorzugsweise einen kreisrunden Querschnitt in Anpassung an die Querschnittsfläche der benutzten Verbindungskörper.

Es empfiehlt sich, den Kabelkanal zum lösbaren Anbringen des Halters an seiner einen Seitenwand eine Rinne mit zugeordneten Kupplungsvorsprüngen aufweisen zu lassen, wobei diese Kupplungsvorsprünge untereinander gleichgestaltet sind. Darüber hinaus ist es zweckmäßig, an der Außenseite des Bodens des Kabelkanals zwei Bodenrinnen mit Kupplungsvorsprüngen anzuordnen. Diese Bodenrinnen sind mit Abstand voneinander angeordnet und unterschiedlich gestaltet, wobei jede der Rinnen eine Einführungsöffnung aufweist. Der Querschnitt der Bodenrinnen ist dabei den unterschiedlich gestalteten Gegenkupplungen des Halters angepaßt.

Nach einem weiteren Vorschlag der Erfindung ist an der Außenseite des Bodens des Kabelkanals eine weitere Rinne mit ihre Einführungsöffnung seitlich begrenzenden Kupplungsvorsprüngen angeordnet. Diese Kupplungsvorsprünge wirken mit Kupplungen zusammen, welche Bestandteil einer Befestigungskonsole sind, die ihrerseits an einer Wand, z.B. unterhalb einer Fensterbank, festgelegt werden kann.

Es empfiehlt sich, die Befestigungskonsole aus zwei vorzugsweise untereinander gleichgestalteten, plattenförmigen Grundkörpern bestehen zu lassen, deren gegenseitige Lage unter Benutzung wenigstens einer Feststelleinrichtung veränderbar ist, und die einerseits einen an der Wand anzubringenden Befestigungswinkel und andererseits einen Anschlußwinkel mit Kupplungen für den Kabelkanal aufweisen.

Jeder der beiden plattenförmigen Grundkörper der Befestigungskonsole weist ein Langloch auf. Dabei sind diese Grundkörper um 90° versetzt zueinander angeordnet, derart, daß sich ihre Langlöcher überlappen, und daß ein zentraler Feststeller beide Langlöcher der Grundkörper durchgreift.

Der Halter für die Konvektionsgitterprofile weist an seiner den Aufnahmeräumen für diese Konvektionsprofile gegenüberliegenden Seite aus der Grundebene vorragende Leisten auf, die sich an der benachbarten Seite der Befestigungskonsole abstützt.

Auf den Zeichnungen ist die Erfindung in mehreren Ausführungsbeispielen dargestellt, und zwar zeigen:
- Fig. 1: einen Querschnitt durch einen Kabelkanal, an dessen einer Seitenwand ein erfindungsgemäßer Halter für Konvektionsgitterprofile angebracht ist bei fehlendem Deckel zum Verschließen der Öffnung des Kabelkanals,
- Fig. 2: im vergrößerten Maßstab und in Seitenansicht den Halter für Konvektionsgitterprofile gemäß der Fig. 1 der Zeichnung mit einer Teilansicht des einen Armes,
- Fig. 3: einen nochmals vergrößerten Schnitt durch den in Fig. 2 eingekreisten Bereich des Halters, teilweise weggeschnitten,
- Fig. 4: einen Schnitt durch das benutzte Konvektionsgitterprofil,
- Fig. 5: in explosionsartiger Darstellung einen Kabelkanal vor seinem Anbringen an den Kupplungen einer Befestigungskonsole, die ihrerseits an einer Wand unterhalb einer Fensterbank angebracht ist, teilweise weggeschnitten und bei fehlendem Halter mit Konvektionsgittern und
- Fig. 6: einen Schnitt durch die Befestigungskonsole, den Halter und den Kabelkanal gemäß der Fig. 5 nach dem Zusammenbau der Teile und nach dem Anbringen des Halters mit den Konvektionsgitterprofilen.

Es sei zunächst erwähnt, daß in den Figuren der Zeichnungen nur diejenigen Teile eines Kabelkanals wiedergegeben sind, welche für das Verständnis der Erfindung Bedeutung haben. So fehlen beispielsweise die in den Innenraum des Kabelkanals unterzubringen Leitungen, Kabel, Installationsgeräte od.dgl. Im übrigen können alle fehlenden und in der Zeichnung nicht dargestellten Teile eine an sich bekannte Ausbildung haben.

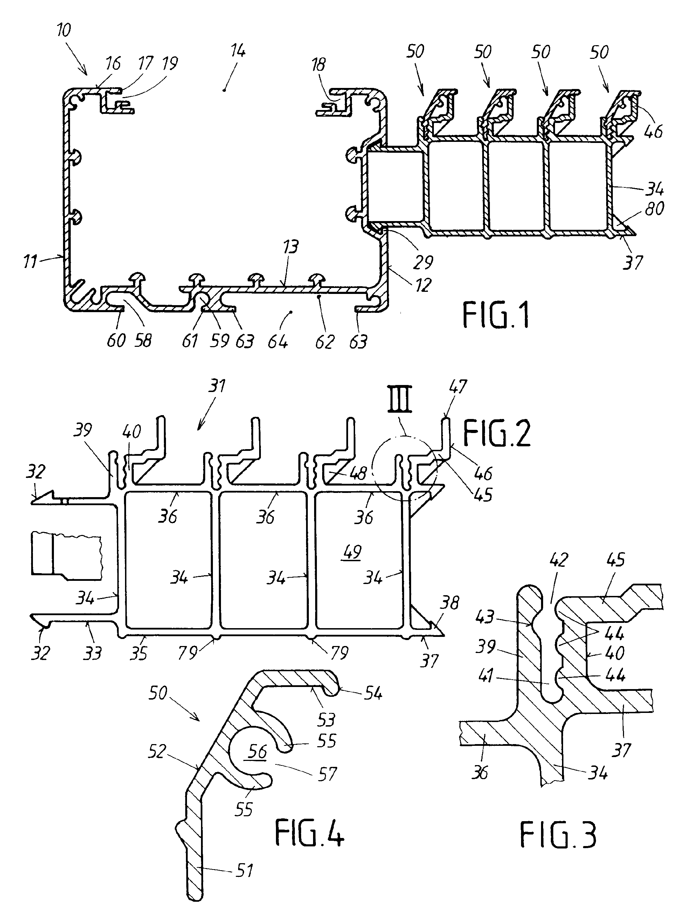

In der Fig. 1 der Zeichnung ist ein generell mit 10 bezeichneter Kabelkanal wiedergegeben. Dieser hat eine im Querschnitt gesehen etwa rechteckige Querschnittsfläche Dabei sind die beiden diametral gegenüberliegenden Seitenwände mit 11 bzw. 12 bezeichnet. Während im gewählten Ausführungsbeispiel die Seitenwand 11 eine glatte Außenfläche aufweist, ist die mit 12 bezeichnete, gegenüberliegende andere Seitenwand mit einer Rinne 28 versehen. Dies bedeutet, daß ein Teil der Seitenwand 12 nach innen gezogen ist. Die Rinnenöffnung 3o wird durch Kupplungsvorsprünge 29 begrenzt.

Die beiden Seitenwände 11 und 12 sind durch einen Boden 13 miteinander verbunden. Dem Boden 13 gegenüberliegend ist eine Öffnung 14 angeordnet, die im gewählten Ausführungsbeispiel nicht die gesamte Oberseite des Kabelkanals 10 erfaßt. Vielmehr wird sie begrenzt durch zwei Teildecken 16. Jede dieser beiden Teildecken 16 läuft in ein freies Ende 17 aus.

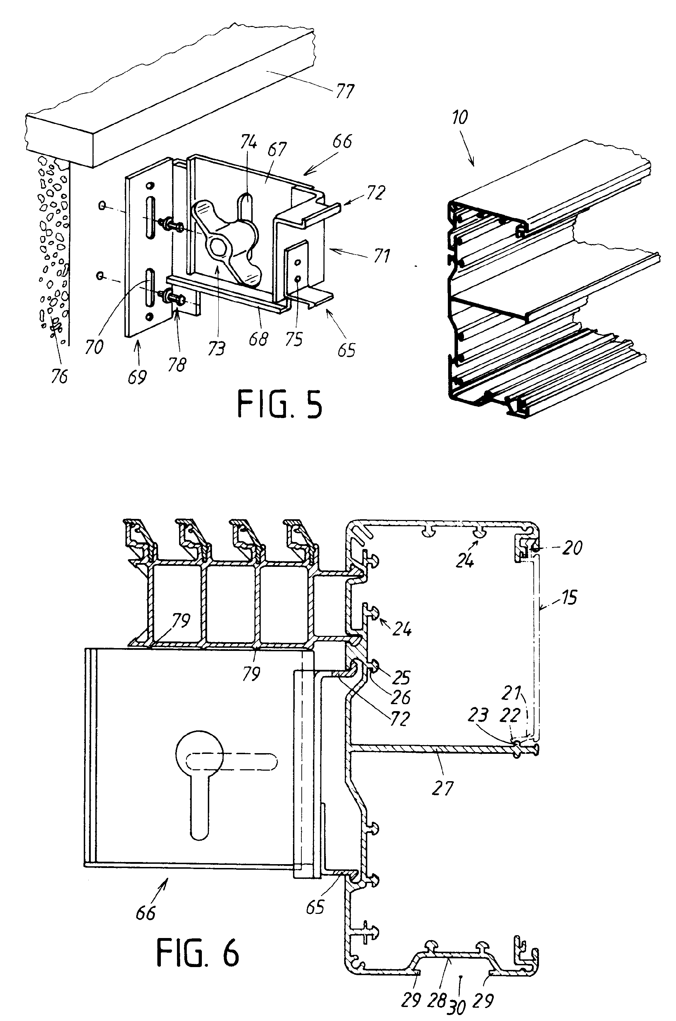

Unterhalb dieser Teildecken 16 befindet sich ein Eingriffsraum 18, in den das Befestigungsende 20 eines in der Fig. 1 nicht dargestellten Deckels 15 untergebracht ist, vergl. dazu die Fig. 6 der Zeichnung. Der Eingriffsraum 18 ist bis auf eine Einführungsöffnung 19 von Wandungen umgeben. Durch diese Einführungsöffnung 19 hindurch kann das Befestigungsende 20 des Deckels 15 in den Eingriffsraum 18 hineingebracht werden. Das Befestigungsende 20 kann innerhalb des Eingriffsraumes 18 mehrere Stellungen einnehmen. Zu diesen Stellungen gehört auch eine lagegesicherte Öffnungsstellung des Deckels, in der ein Beschicken des Hohlraumes des Kabelkanals 10 durch die Öffnung 14 hindurch möglich wird.

Auf der dem Befestigungsende 20 des Deckels 15 gegenüberliegenden anderen Ende hat dieser einen quer zu seiner Grundfläche verlaufenden Vorsprung 21, der mit einem aus der Ebene des Vorsprunges vorragenden Haltehaken 22 versehen ist, der mit einem Gegenlager 23 zusammenwirkt. Im Ausführungsbeispiel nach der Fig. 6 der Zeichnung ist dieses Gegenlager 23 an einer Trennwand 27 des Kabelkanals 10 angeordnet, die in den Boden 13 übergeht.

In der in Fig. 6 dargestellten Schließlage des Deckels 15 greift dessen Haltehaken 22 hinter das Gegenlager 23.

Dem Boden 13 jedes Kabelkanals 10 sind mehrere Halteleisten 24 zugeordnet, die in Längsrichtung des Kabelkanals durchlaufen und die der Befestigung z.B. von Installationsgeräten, Trennwänden, Adaptern od.dgl. dienen. Um dabei Befestigungsmöglichkeiten an der Halteleiste 24 zu schaffen, ist diese im Querschnitt gesehen pilzförmig gestaltet, wobei der Pilzkopf mit 25 bezeichnet ist. Dieser geht in einen durchmessermäßig kleineren, nicht näher bezeichneten Stiel über, der mit seinem Ende in den Boden 13 ausläuft. Durch diese Durchmesserunterschiede zwischen dem Pilzkopf 25 und seinem Stiel entstehen Schultern 26, die als Gegenrasten benutzt werden, um Installationsgeräte, Adapter, Trennwände od.dgl. aufzunehmen. Diese nicht dargestellten Teile sind in bekannter Weise mit Rasten ausgerüstet, welche mit den als Gegenrasten wirkenden Schultern 26 zusammenwirken können. Im Ausführungsbeispiel nach der Fig. 1 der Zeichnungen sind solche Halteleisten 24 auch an den Innenwandungen der Seitenwände 11 und 12 des Kabelkanals 10 vorgesehen.

Erfindungsgemäß ist nun bei dem Ausführungsbeispiel des Kabelkanals nach der Fig. 1 der Zeichnung den Kupplungsvorsprüngen 29 der Rinne 28 ein generell mit 31 bezeichneter Halter für Konvektionsgitterprofile 50 zugeordnet. Dieser Halter 31 ist in den Fig. 2 und 3 der Zeichnung im größeren Maßstab wiedergegeben. Daraus ergibt sich, daß dieser Halter 31 wabenförmig gestaltet ist. Im Ausführungsbeispiel besteht der Halter 31 nach der Fig. 2 der Zeichnungen aus insgesamt drei Waben. Jede Wabe setzt sich aus Wandungen 34 und Querwandungen 35 bzw. 36 zusammen. Diese sind paarweise und mit Abstand zueinander angeordnet. Sie umgrenzen jeweils einen Raum 49. Die Wabe der auf der Fig. 2 linken Seite des Halters 31 hat an der Wandung 34 liegend die Gegenkupplungen 32. An der einen Querwandung 36 des Querwandungspaares jeder Wabe ist ein Aufnahmeraum 41 für ein Konvektionsgitterprofil 50 vorgesehen.

Die Gegenkupplungen 32 des Halters 31 sind im Bereich des vorderen Endes von zwei parallel und in Abstand voneinander vorgesehenen Armen 33 angeordnet, deren rückwärtige Enden in die benachbarte Wandung 34 des Halters 31 übergehen. Der Halter 31 ist einstückig aus einem der in der Elektroindustrie gebräuchlichen Werkstoffe, insbesondere Kunststoffe hergestellt.

Bei der Ausführungsform des Halters 31 nach der Fig. 2 der Zeichnung weisen die Arme 33 des Halters 31 an ihrem vorderen freien Enden unterschiedlich gestaltete Gegenkupplungen auf. Die Gegenkupplung 32 des in der Fig. 2 oberen Armes 33 des Halters 31 ist als Haltehaken mit scharfkantigem Profil ausgebildet. Demgegenüber läuft die untere Gegenkupplung 32 in ein abgerundetes Ende aus. Die scharfkantige Gegenkupplung 32 des Armes 33 des Halters 31 wirkt mit dem oberen Kupplungsvorsprung 29 zusammen. Diese Anordnung ist deshalb gewählt, weil die den Halter 31 belastenden Kräfte in der Regel von oben kommen. Durch diese Kräfte soll der Halter nicht aus seiner Lage in bezug auf den Kabelkanal 10 herausgebracht werden können. Anders ist es dagegen, wenn Kräfte auf die in der Fig. 1 untere Seite des Halters 31 einwirken. Von dieser Seite her soll ein Aufheben der Verbindung zwischen dem Kabelkanal 10 und dem Halter 31 möglich sein. Daher ist an dem in der Fig. 1 unteren Kupplungsvorsprung 29 die Gegenkupplung angebracht, die mit einem abgerundeten Ende versehen ist.

Wie die Fig. 3 der Zeichnung am besten erkennen läßt, sind an der oberen Querwand 36 jeder Wabe des Halters 31 zwei im Abstand voneinander liegende und nach außen weisende Verlängerungen 39 bzw. 40 angeordnet. Diese schließen einen Aufnahmeraum 41 zwischen sich ein, durch dessen Einführungsöffnung 42 das Konvektionsgitterprofil 50 bereichsweise in den Aufnahmeraum 41 einführbar ist.

Die Verlängerung 40 weist eine quer zu ihr liegende Abwinkelung 45 auf, die ihrerseits in einen senkrecht zur oberen Querwand 36 der Wabe verlaufenden vorderen Teil 46 übergeht. Dieser läuft in eine Abstützfläche 47 für das Konvektionsgitterprofil 50 aus.

Aus der Fig. 3 der Zeichnung ist ersichtlich, daß die Begrenzungswandungen des Aufnahmeraumes 41 des Halters 31 auf der einen Seite Vorsprünge 44 und auf der gegenüberliegenden anderen Seite eine Vertiefung 43 aufweisen. In die Vertiefung 43 greift ein nicht näher bezeichneter Vorsprung des Haltebereiches 51 des Konvektionsgitterprofiles 50 ein. Die glatte Wandung des Haltebereiches 51 des Konvektionsgitterprofils liegt an den Vorsprüngen 44 an und zwar in dem Scheitelpunkt der etwa halbkugelförmig gekrümmten Vorsprünge 44.

Erfindungsgemäß ist vorgesehen, die wirksame Länge des Halters 31 durch Abtrennen einer oder mehrerer Waben zu verändern. Zu diesem Zweck sind die Waben des Halters 31 über nicht näher bezeichnete Sollbruchstellen miteinander verbunden. Diese Sollbruchstellen ermöglichen ein Abtrennen einer oder mehrerer Waben von dem Halter 31. Es können aber auch an den Waben Markierungen, wie Schneidmarkierungen vorhanden sein. Diese dienen zum Ansetzen eines Trennwerkzeuges.

Erfindungsgemäß ist ferner die Möglichkeit gegeben, an den Halter 31 in der Fig. 1 der Zeichnung noch einen weiteren Halter 31 anzukuppeln. Um dieses zu ermöglichen, hat der Halter 31 an seiner den Armen 33 mit den Gegenkupplungen 32 gegenüberliegenden Seite Verbindungsarme 37 mit Haken 38. Diese dienen dem Zusammenkuppeln des einen Halters 31 mit einem weiteren Halter 31. Die beiden zusammenzukuppelnden Halter 31 können dabei die gleiche Länge aufweisen. Jedoch ist es auch ohne weiteres möglich, Halter mit unterschiedlicher wirksamer Länge miteinander zu verbinden.

Das in der Fig. 4 der Zeichnung im Querschnitt wiedergegebene Konvektionsgitterprofil 50 ist ein einstückiger metallischer Körper, vorzugsweise ein Aluminiumkörper. Dieser hat einen Haltebereich 51, der zu seiner Festlegung am Halter 31 dient und der daher in den Aufnahmeraum 41 in der in Fig. 1 ersichtlichen Weise eingeführt werden kann. An den Haltebereich 51 schließt sich ein geneigt zu ihm verlaufender Mittelbereich 52 an, der seinerseits in einen senkrecht zum Haltebereich 51 liegenden Abstützbereich 53 übergeht. Das vorderste freie Ende des Abstützbereiches 53 ist bei 54 abgewinkelt und zwar um etwa 90° gegenüber der Horizontalen.

An der Innenfläche des Mittelbereiches 42 des Konvektionsgitterprofiles 50 sind Vorsprünge 55 angeformt, die einen im Querschnitt gesehen kreisförmigen Aufnahmeraum 56 zwischen sich einschließen, der auch eine Einführungsöffnung 57 aufweist. In diesen Aufnahmeraum 56 können Verbindungskörper für die Konvektionsgitterprofile 50 eingebracht werden. Dabei kann es sich beispielsweise um bekannte Spannstifte handeln. Diese können durch die Einführungsöffnung 57 in den Aufnahmeraum 56 eingeführt werden.

Aus der Fig. 6 der Zeichnung ist ersichtlich, daß der Halter 31 für die Konvektionsgitterprofile 50 wahlweise auch im Bereich des Bodens des Kabelkanals 10 angebracht werden kann. Um dieses zu ermöglichen, sind an der Außenseite des Bodens 13 des Kabelkanals 10 zwei Bodenrinnen 58 bzw. 59 mit Kupplungsvorsprüngen 60 bzw. 61 angebracht. Die Bodenrinnen 58 bzw. 59 sind mit Abstand voneinander angeordnet und unterschiedlich gestaltet. Sie weisen ferner jeweils eine Einführungsöffnung auf, die nicht näher bezeichnet ist. Die Bodenrinne 59 hat dabei einen solchen Querschnitt, der derjenigen Gegenkupplung 32 angepaßt ist, die ein abgerundetes Ende aufweist. Demgemäß wirkt die Gegenkupplung 32 mit ihrem scharfkantigen Profil mit der Bodenrinne 58 zuammen, so wie dies in der Fig. 6 der Zeichnung wiedergegeben ist.

Der Kabelkanal 10 gemäß der Fig. 6 der Zeichnung unterscheidet sich von demjenigen nach der Fig. 1 dadurch, daß er durch eine Trennwand 27 in zwei nicht näher bezeichnete Kammern unterteilt ist. Im Bereich der Außenwände der Trennwand 27 sind die Gegenlager 23 angeformt, die mit den Haken 22 des Deckels 15 zusammenwirken.

Erfindungsgemäß weist der Halter 31 auch Einrichtungen zur Erzielung eines Schutzes gegen seitliches Verschieben von zusammengekuppelten Haltern auf. Im gewählten Ausführungsbeispiel besteht dieser Verschiebeschutz aus Verbindungswandteilen, die jeweils zwischen einer Wandung 34 und dem Verbindungsarm 37 eines Halters 31 angeordnet sind. Gegen diese Verbindungswandteile 80 legen sich beim Zusammenkuppeln zweier Halter 31 Seitenbereiche der Gegenkupplungen 32 des zweiten Halters 31 an.

Nachzutragen bleibt noch, daß im Bereich der Verlängerung 39 und der sich daran anschließenden Abwinkelung 45 eine Versteifung 48 vorgesehen ist.

Der Kabelkanal 10 hat an der Außenseite seines Bodens 13 liegend eine weitere Rinne 62 mit einer Einführungsöffnung 64. Diese Einführungsöffnung 64 wird seitlich durch Kupplungsvorsprünge 63 begrenzt, die mit Kupplungen 65 zusammenwirken, die Bestandteil einer Befestigungskonsole 66 sind, die ihrerseits an einer Wand 76 od.dgl. festlegbar ist. Die Befestigungskonsole 66 ist - vergl. dazu die Fig. 5 - an einer aufrechten Wand 76 angebracht und zwar unterhalb einer mit 77 bezeichneten Fensterbank. Zu der Befestigungskonsole 66 gehören zwei plattenförmige Grundkörper 67 und 68, die untereinander gleichgestaltet sind. Bei den beiden plattenförmigen Grundkörpern handelt es sich um solche, die aus einem metallischen Werkstoff gefertigt sind und die in Draufsicht gesehen etwa quadratische Gestalt aufweisen, wobei eine der Seitenwandungen abgewinkelt ist. Beide plattenförmigen Grundkörper 67 und 68 haben ein Langloch 74. Die in den beiden Grundkörpern 67 und 68 angeordneten Langlöcher 74 sind um 90° versetzt zueinander angeordnet. In diese Lage überlappen sie sich.

Zu der Befestigungskonsole 66 gehört auch ein Feststeller 73. Dieser zentrale Feststeller 73 hat einen Handgriff, mit dem die beiden plattenförmigen Grundkörper 67 und 68 nach erfolgter Einstellung ihrer gegenseitigen Lage fixiert werden können. Die Ausbildung des Feststellers ist bekannt, so daß auf die Angabe näherer Einzelheiten verzichtet werden kann.

An der Unterseite des Halters 31 sind Leisten 79 angeformt. Diese liegen im gewählten Ausführungsbeispiel gemäß der Fig. 2 der Zeichnung jeweils im Kreuzungspunkt einer Wand 34 mit den beiden Querwänden 35. Diese Leisten 79 des Halters 31 liegen in der in Fig. 6 dargestellten Gebrauchslage an oberen Wandungen der Befestigungskonsole 66 an.

Aus der Fig. 5 der Zeichnung ergibt sich, daß der eine der beiden Grundkörper 67 und 68 mit einem generell mit 69 bezeichneten Befestigungswinkel fest verbunden, vorzugsweise verlötet ist. Der Befestigungswinkel 69 ist aus einem metallischen Werkstoff gefertigt und im Querschnitt gesehen etwa L-förmig gestaltet. Der größere der beiden Schenkel dient zum Festlegen der Befestigungskonsole 66 an der Außenfläche der Wand 76. Im gewählten Ausführungsbeispiel hat daher der größere Schenkel des L-förmigen Befestigungswinkels 17 übereinander angeordnete Durchbrechungen 70, die von Befestigungselementen 78, wie Schrauben, Dübeln od.dgl. durchgriffen werden können. Diese sind ihrerseits in nicht näher bezeichneten Sacklochbohrungen der Wand 76 befestigt.

Der jeweils andere Grundkörper 67, 68 ist in grundsätzlich bekannter Weise mit einem Anschlußwinkel 71 fest verbunden. Dabei wird ein Anlöten bevorzugt. Dieser Anschlußwinkel 71 dient zur Herstellung einer Verbindung mit dem Kabelkanal 10. Im Ausführungsbeispiel nach der Fig. 5 der Zeichnung hat der Anschlußwinkel 71 eine Kupplung 72, die Bestandteil des Anschlußwinkels ist. Eine zweite mit 65 bezeichnete Kupplung ist über Befestigungskörper 75 mit dem Anschlußwinkel 71 fest verbunden. Anstelle dieser festen Verbindung kann gegebenenfalls auch eine lösbare Verbindung, beispielsweise in Form von Rasten, gewählt werden. Die Kupplungen 72 und 65 der Befestigungskonsole 66 wirken in der in Fig. 6 dargestellten Weise mit den Kupplungsvorsprüngen 63 der Rinne 62 zusammen, welche an der Außenseite des Bodens 13 des Kabelkanals 10 vorgesehen ist.

Wie bereits erwähnt, sind die dargestellten Ausführungen nur beispielsweise Verwirklichungen der Erfindung und diese nicht darauf beschränkt. Vielmehr sind noch mancherlei andere ausführungen und Anwendungen möglich. Dies gilt insbesondere für die Gestalt der Rinnen an den Seltenwandungen und am Boden des Kabelkanals sowie der zugeordneten Kupplungen. In Abhängigkeit davon ist eine Anpassung der Gestalt der Gegenkupplungen 32 des Halters 31 erforderlich. Der Halter 31 kann selbst eine andere als die dargestellte Ausbildung erhalten. Auch kann die Anzahl der Waben, aus welchen der Halter zusammengesetzt ist, variiert werden. Ferner ist es möglich, andere als das dargestellte Konvektionsgitterprofil zu benutzen.

## Patentansprüche

1. Kabelkanal (10), wie Brüstungskanal, Geräteeinbaukanal od.dgl., dessen Gehäuse an einer Seite eine durch einen Deckel (15) verschließbare Öffnung (14) und dessen wenigstens eine Seitenwand (12) und dessen Bodenaußenseite durchlaufende Rinnen (28, 58, 59) mit je einer Rinnenöffnung haben, deren Begrenzungswandungen bereichsweise mit Kupplungsvorsprüngen (29, 60, 61) ausgerüstet sind, wobei an den Kupplungsvorsprüngen (29, 60, 61) der Rinnen (28, 58, 59) Gegenkupplungen (32) eines Halters (31) für Profile anbringbar sind,
**dadurch gekennzeichnet**,
daß die Profile Konvektionsgitterprofile (50) sind, und daß der Halter (31) wabenförmig gestaltet ist, und daß jede Wabe aus Wandungen (34) und Querwandungen (35 bzw. 36) besteht, die paarweise mit Abstand voneinander angeordnet sind, jeweils einen Raum (49) umgrenzen, und von denen der einen Wandung (34) des Wandungspaares die Gegenkupplungen (32) und der einen Querwandung (36) des Querwandungspaares wenigstens ein Aufnahmeraum (41) für ein Konvektionsgitterprofil (50) zugeordnet ist.

2. Kabelkanal nach Anspruch 1, dadurch gekennzeichnet, daß die Gegenkupplungen (32) des Halters (31) im Bereich des vorderen Endes von zwei parallel und im Abstand voneinander angeordneten Armen (33 angeordnet sind, deren rückwärtige Enden in die benachbarte Wandung (34) des Halters (31) übergehen.

3. Kabelkanal nach den Ansprüchen 1 bis 2, dadurch gekennzeichnet, daß an der oberen Querwand (36) jeder Wabe des Halters (31) zwei im Abstand voneinander liegende und nach außen weisende Verlängerungen (39 bzw. 40) angeordnet sind, die einen Aufnahmeraum (41) zwischen sich einschließen, durch dessen Einführungsöffnung (42) das Konvektionsgitterprofil (50) bereichsweise in den Aufnahmeraum (41) einführbar ist.

4. Kabelkanal nach Anspruch 3, dadurch gekennzeichnet, daß die Verlängerung (40) eine quer zu ihr liegende Abwinkelung (45) aufweist, die ihrerseits in einen senkrecht zur oberen Querwand (36) der Wabe verlaufenden vorderen Teil (46) übergeht, der in eine Abstützfläche (47) für das Konvektionsgitterprofil (50) ausläuft.

5. Kabelkanal nach Anspruch 3 und 4, dadurch gekennzeichnet, daß die Begrenzungswandungen des Aufnahmeraumes (41) Vertiefungen (43) und Vorsprünge (44) aufweisen, die mit dem Haltebereich (51) des Konvektionsgitterprofiles (50) zusammenwirken.

6. Kabelkanal nach Anspruch 1 bis 2, dadurch gekennzeichnet, daß der Halter (31) an seiner den Armen (33) mit den Gegenkupplungen (32) gegenüberliegenden Seite Verbindungsarme (37) mit Haken (38) aufweist, die dem Zusammenkuppeln des einen Halters (31) mit einem weiteren Halter (31) dienen.

7. Kabelkanal nach einem oder mehreren der vorangehenden Ansprüche, dadurch gekennzeichnet, daß das Konvektionsgitterprofil (50) ein einstückiger metallischer Körper ist, der einen Haltebereich (51) zu seiner Festlegung am Halter (31) aufweist, an den sich ein geneigt zu ihm verlaufender Mittelbereich (52) anschließt, der seinerseits in einen senkrecht zum Haltebereich (51) liegenden Abstützbereich (53) übergeht (Fig. 4).

8. Kabelkanal nach Anspruch 7, dadurch gekennzeichnet, daß der Innenfläche des Mittelbereiches (52) des Konvektionsgitterprofiles (50) Vorsprünge (55) angeformt sind, die einen Aufnahmeraum (56) zwischen sich einschließen, der eine Einführungsöffnung (57) aufweist.

9. Kabelkanal nach Anspruch 1, dadurch gekennzeichnet, daß der Halter (31) für die Konvektionsgitterprofile (50) wahlweise mit einer der Seitenwände des Kabelkanals (10) oder mit seinem Boden (13) verbindbar ist.

10. Kabelkanal nach Anspruch 9, dadurch gekennzeichnet, daß der Kabelkanal (10) zum lösbaren Anbringen des Halters (31) an seiner Seitenwand (12) eine Rinne (28) mit zugeordneten Kupplungsvorsprüngen (29) und an der Außenseite seines Bodens zwei Bodenrinnen (58 bzw. 59) mit Kupplungsvorsprüngen (60 bzw. 61) aufweist.

11. Kabelkanal nach Anspruch 9 und 10, dadurch gekennzeichnet, daß die Bodenrinnen (58 bzw. 59) mit Abstand voneinander angeordnet und unterschiedlich gestaltet sind und je eine Einführungsöffnung aufweisen.

12. Kabelkanal nach Anspruch 1 und 9, dadurch gekennzeichnet, daß an der Außenseite des Bodens (13) des Kabelkanals (10) eine weitere Rinne (62) mit ihre Einführungsöffnung (64) seitlich begrenzenden Kupplungsvorsprüngen (63) angeordnet sind, die mit Kupplungen (65) zusammenwirken, welche Bestandteil einer Befestigungskonsole (66) sind, die ihrerseits an einer Wand (76) od.dgl. festlegbar ist.

13. Kabelkanal nach Anspruch 12, dadurch gekennzeichnet, daß die Befestigungskonsole (66) aus zwei vorzugsweise untereinander gleichgestalteten, plattenförmigen Grundkörpern (67, 68) besteht, deren gegenseitige Lage unter Benutzung wenigstens einer Feststelleinrichtung veränderbar ist, und die einerseits einen an der Wand (76) anzubringenden Befestigungswinkel (69) und andererseits einen Anschlußwinkel (71) mit Kupplungen (65 bzw. 72) für den Kabelkanal (10) aufweisen.

14. Kabelkanal nach Anspruch 12 und 13, dadurch gekennzeichnet, daß jeder der beiden plattenförmigen Grundkörper (67, 68) der Befestigungskonsole (66) ein Langloch (74) aufweist, und daß diese Grundkörper (67, 68) um 90° versetzt zueinander angeordnet sind, derart, daß sich ihre Langlöcher (74) überlappen, und daß ein zentraler Feststeller (73) beide Langlöcher (74) der Grundkörper (67, 68) durchgreift.

15. Kabelkanal nach Anspruch 1 und 12, dadurch gekennzeichnet, daß der Halter (31) an seiner den Aufnahmeräumen (41) für die Konvektionsgitterprofile (50) gegenüberliegenden Seite aus der Grundebene vorragende Leisten (79) aufweist, die sich an der benachbarten Seite der Befestigungskonsole (66) abstützen (Fig. 6).

16. Kabelkanal nach den Ansprüchen 1 bis 2, dadurch gekennzeichnet, daß die Arme (33) des Halters (31) an ihren vorderen freien Enden unterschiedlich gestaltete Gegenkupplungen (32) aufweisen.

17. Kabelkanal nach Anspruch 6, dadurch gekennzeichnet, daß die Gegenkupplung (32) des einen Armes (33) des Halters (31) als Haltehaken mit scharfkantigem Profil ausgebildet ist, während die andere Gegenkupplung in ein abgerundetes Ende ausläuft.

18. Kabelkanal nach den Ansprüchen 11 und 17, dadurch gekennzeichnet, daß der Querschnitt der Bodenrinnen (58 bzw. 59) dem der unterschiedlich gestalteten Gegenkupplungen (32) des Halters (31) angepaßt ist.

19. Kabelkanal nach Anspruch 1, dadurch gekennzeichnet, daß die wirksame Länge des Halters (31) durch Abtrennen einer oder mehrerer Waben veränderbar ist.

20. Kabelkanal nach Anspruch 19, dadurch gekennzeichnet, daß die Waben des Halters (31) über Sollbruchstellen miteinander verbunden sind oder Markierungen, wie Schneidmarkierungen, zum Ansetzen eines Trennwerkzeuges aufweisen.

21. Kabelkanal nach Anspruch 1 bis 2, dadurch gekennzeichnet, daß der Halter (31) Einrichtungen zur Erzielung eines Schutzes gegen seitliches Verschieben aufweist.

22. Kabelkanal nach Anspruch 21, dadurch gekennzeichnet, daß der Verschiebeschutz aus Verbindungswandungsteilen (80) besteht, die jeweils zwischen einer Wandung (34) und dem Verbindungsarm (37) eines Halters (31) angeordnet sind, und gegen die sich beim Zusammenkuppeln zweier Halter (31) Seitenbereiche der Gegenkupplungen (32) des zweiten Halters (31) anlegen.

## Claims

1. A cable channel (10), such as wall trunking, apparatus moulding channel or similar, whose housing has on one side an opening (14) which can be closed by a lid (15) and at least one of its side walls (12) and its bottom outside surface have continuous grooves (28, 58, 59) each with a groove opening, the limiting walls of said grooves being provided in sections with coupling projections (29, 60, 61), mating couplings (32) of a holder (31) being attachable to the coupling projections (29, 60, 61) of the grooves (28, 58, 59) for profiles,
characterised in that
the profiles are convection grid profiles (50), and that the holder (31) is designed in the shape of a honeycomb, and that each honeycomb consist of walls (34) and cross walls (35 and 36), arranged in pairs at a distance from each other, in each case enclosing a space (49), of which the one wall (34) of the wall pair is provided with the mating couplings (32) and the one cross wall (36) of the cross wall pair has at least one receiving space (41) for a convection grid profile (50).

2. A cable channel according to claim 1, characterised in that the mating couplings (32) of the holder (31) are arranged in the front section of the end of two parallel arms (33) located at a distance from each other, the rear ends of said arms merging with the neighbouring wall (34) of the holder (31).

3. A cable channel according to claims 1 and 2, characterised in that two extensions (39 and 40) arranged at a distance from each other and pointing outwards are located on the top cross wall (36) of each honeycomb of the holder (31), said extensions enclosing a receiving space (41) between them, and through the introduction opening (42) of said space a section of the convection grid profile (50) can be inserted into the receiving space (41).

4. A cable channel according to claim 3, characterised in that the extension (40) has an angled section (45) lying at right angles to it which in turn merges into a front section (46) running perpendicular to the top cross wall (36) of the honeycomb, said front section ending in a support surface (47) for the convection grid profile (50).

5. A cable channel according to claims 3 and 4, characterised in that the limiting walls of the receiving space (41) have recesses (43) and projections (44) which interact with the holding section (51) of the convection grid profile (50).

6. A cable channel according to claims 1 and 2, characterised in that the holder (31) has, on its side opposite the arms (33) with the mating couplings (32), connection arms (37) with hooks (38) which serve to couple the one holder (31) with another holder (31).

7. A cable channel according to one of more of the preceding claims, characterised in that the convection grid profile (50) is a single-part metallic body which has a holding section (51) to secure it to the holder (31), said holding section being adjoined by a central section (52) inclined to it which in turn merges with a support section (53) arranged perpendicular to the holding section (51) (Fig. 4).

8. A cable channel according to claim 7, characterised in that projections (55) are formed on the inside surface of the central section (52) of the convection grid profile (50), said projections enclosing a receiving space (56) between them whcih has an insertion opening (57).

9. A cable channel according to claim 1, characterised in that the holder (31) for the convection grid profiles (50) can be connected either to one of the side walls of the cable channel (10) or to its bottom (13).

10. A cable channel according to claim 9, characterised in that the cable channel (10) has on its side wall (12) a groove (28) provided with coupling projections (29) for the detachable mounting of the holder (31) and two bottom grooves (58 and 59) with coupling projections (60 and 61) on the outside surface of its bottom.

11. A cable channel according to claims 9 and 10, characterised in that the bottom grooves (58 and 59) are arranged at a distance from each other and are of different designs, each exhibiting one insertion opening.

12. A cable channel according to claims 1 and 9, characterised in that another groove (62) with coupling projections (63) laterally limiting its insertion opening (64) is arranged on the outside surface of the bottom of the cable channel (10), said projections interacting with couplings (65) which are an integral part of an attachment bracket (66), which in turn can be fixed to a wall (76) or similar.

13. A cable channel according to claim 12, characterised in that the attachment bracket (66) consists of two plate-like base elements (67, 68) preferably of identical design whose position in relation to each other can be changed by using at least one fixing device and which, on the one hand, have an attachment angle (69) to be fixed to the wall (76) and, on the other hand, an end angle (71) with couplings (65 and 72) for the cable channel (10).

14. A cable channel according to claims 12 and 13, characterised in that each of the two plate-like base elements (67, 68) of the attachment bracket (66) has a slot (74), and that these base elements (67, 68) are arranged at an angle of 90° to each other in such a way that their slots (74) overlap, and that a central locking device (73) passes through both slots (74) of the base elements (67, 68).

15. A cable channel according to claims 1 and 12, characterised in that the holder (31) has strips (79) on its side opposite the receiving spaces (41) for the convection grid profiles (50), said strips resting on the adjacent side of the attachment bracket (66) (Fig. 6).

16. A cable channel according to claims 1 and 2, characterised in that the arms (33) of the holder (31) are provided with mating couplings of different designs on their front free ends.

17. A cable channel according to claim 6, characterised in that the mating coupling (32) of the one arm (33) of the holder (31) is designed as a holding hook with a sharp-edged profile while the other mating coupling has a rounded end.

18. A cable channel according to claims 11 and 17, characterised in that the cross section of the bottom grooves (58 and 59) matches that of the differently designed mating couplings (32) of the holder (31).

19. A cable channel according to claim 1, characterised in that the effective length of the holder (31) can be changed by removing one or more honeycombs.

20. A cable channel according to claim 19, characterised in that the honeycombs of the holder (31) are connected to each other by means of predetermined breaking points or have markings, such as cutting markings, for applying a parting tool.

21. A cable channel according to claims 1 to 2, characterised in that the holder (31) has devices for providing protection against lateral shifting.

22. A cable channel according to claim 21, characterised in that the shift protection device consists of connection wall parts (80) each of which is arranged between one wall (34) and the connection arm (37) of a holder (31) and against which side sections of the mating couplings (32) of the second holder (31) rest when two holders (31) are coupled together.

## Revendications

1. Canal pour câbles (10), en particulier goulotte de paroi, canal pour appareillages ou similaires dont le boîtier présente présente sur un côté un orifice (14) obturable par un couvercle (15) et dont au moins une paroi latérale (12) et la face extérieure du fond présentent des rigoles continues (28, 58, 59) présentant chacune une ouverture et dont les parois limitatrices sont dotées localement de saillies d'accouplement (29, 60, 61), les accouplements antagonistes (32) d'un support (31) de profilés étant fixables contre ces saillies d'accouplement (29, 60, 61) des rigoles (28, 58, 59),
**caractérisé en ce que**
les profilés sont des profilés à grille de convection (50) et que le support (31) est de forme alvéolaire et en ce que chaque alvéole se compose de parois (34) et de parois transversales (35 et 36) disposées à intervalle les unes des autres et délimitant chacune un volume (49) et pour lesquelles les accouplements antagonistes (32) sont affectés à une paroi (34) de la paire de parois, et au moins un volume-logement (41) d'un profilé à grille de convection (50) est affecté à une paroi transversale (36) de la paire de parois transversales.

2. Canal pour câbles selon la revendication 1, caractérisé en ce que les accouplements antagonistes (32) du support (31) sont disposés dans la zone de l'extrémité avant de deux bras (33) parallèles situés à une certaine distance l'un de l'autre et dont les extrémités arrière rejoignent la paroi voisine (34) du support (31).

3. Canal pour câbles selon les revendications 1 et 2, caractérisé en ce que deux rallonges (39 et 40) distantes l'une de l'autre et tournées vers l'extérieur sont disposées contre la paroi latérale supérieure (36) de chaque alvéole du support (31), lesquelles (39 et 40) enclorent entre elles un volume-logement (41) par l'ouverture (42) duquel le profilé à grille de convection (50) est introductible partiellement dans le volume-logement (41).

4. Canal pour câbles selon revendication 3, caractérisé en ce que la rallonge (40) présente un coude (45) transversal à celle-ci, lequel (45) évolue vers une partie avant (46) perpendiculaire par rapport à la paroi transversale supérieure (36) de l'alvéole et se terminant par une surface (47) sur laquelle vient s'appuyer le profilé à grille de convection (50).

5. Canal pour câbles selon les revendications 3 et 4, caractérisé en ce que les parois limitatrices du volume-logement (41) présentent des creux (43) et des saillies (44) interagissant avec la zone de retenue (51) du profilé à grille de convection (50).

6. Canal pour câbles selon les revendications 1 et 2, caractérisé en ce que le support (31) présente, du côté opposé aux bras (33) à accouplements antagonistes (32), des bras de liaison (37) à crochets (38) servant à établir la jonction entre un support (31) et un autre support (31).

7. Canal pour câbles selon l'une ou plusieurs des revendications précédentes, caractérisé en ce que le profilé à grille de convection (50) est un corps métallique présentant une zone de retenue (51) permettant de l'immobiliser contre le support (31) et suivie d'une zone médiane (52) inclinée par rapport à elle (51), laquelle (52) s'infléchit verticalement pour former une zone d'appui (53) perpendiculaire à la zone de retenue (51) (fig. 4).

8. Canal pour câbles selon la revendication 7, caractérisé en ce que des saillies (55) sont formées contre la surface intérieure de la zone médiane (52) du profilé à grille de convection (50) lesquelles (55) délimitent entre elles un volume-logement (56) qui présente un orifice d'introduction (57).

9. Canal pour câbles selon la revendication 1, caractérisé en ce que le support (31) des profilés à grille de convection (50) est reliable au choix avec l'une des parois latérales du canal pour câbles (10) ou avec son fond (13).

10. Canal pour câbles selon la revendication 9, caractérisé en ce que le canal pour câble (10) présente, contre sa paroi latérale (12), pour permettre la fixation amovible du support (31), une rigole (28) à saillies d'accouplements (29) y affectées et, contre la face extérieure de son fond, deux rigoles de fond (58 et 59) à saillies d'accouplement (60 et 61).

11. Canal pour câbles selon les revendications 9 et 10, caractérisé en ce que les rigoles de fond (58 et 59) sont disposées à une certaine distance l'une de l'autre, que leurs géométries sont différentes et qu'elles présentent chacune un orifice d'introduction.

12. Canal pour câbles selon les revendications 1 et 9, caractérisé en ce que sur la face extérieure du fond (13) du canal à câbles (10) est disposée une autre rigole (62) à saillies d'accouplement (63) qui délimitent son orifice d'ouverture (64), lesdites saillies (63) interagissant avec les moyens d'accouplement (65) faisant partie d'une console de fixation (66) qui est immobilisable contre un mur (76) ou assimilé.

13. Canal pour câbles selon la revendication 12, caractérisé en ce que la console de fixation (66) se compose de deux corps de base (67, 68) en forme de plaque et de configuration identique disposés de préférence l'un en-dessous de l'autre et dont les positions réciproques sont modifiables par utilisation d'au moins un dispositif d'immobilisation, et qui présentent d'une part une cornière de fixation (69) à monter contre le mur (76) et d'autre part une cornière de liaison (71) à moyens d'accouplement (65 et 72) avec le canal pour câbles (10).

14. Canal pour câbles selon les revendications 12 et 13, caractérisé en ce que chacun des corps de base (67, 68) en forme de plaques de la console de fixation (66) présente un trou oblong (74) et que ces corps (67, 68) sont disposés décalés de 90° l'un par rapport à l'autre de sorte que leurs trous oblongs (74) se superposent et qu'un moyen d'immobilisation central (73) traverse les deux trous oblongs (74) des corps de base (67, 68).

15. Canal pour câbles selon les revendications 1 et 12, caractérisé en ce que le support (31) présente, du côté faisant face aux volumes-logements (41) des profilés à grille de convection (50), des listels (79) saillant du plan de base et prenant appui sur le côté voisin de la colonne de fixation (66) (fig. 6).

16. Canal pour câbles selon les revendications 1 et 2, caractérisé en ce que les bras (33) du support (31) présentent des accouplements antagonistes (32) de géométries diverses situés en leurs extrémités avant libres.

17. Canal pour câbles selon la revendication 6, caractérisé en ce que l'accouplement antagoniste (32) d'un bras (33) du support (31) a la forme d'un crochet de retenue dont le profil présente des arêtes vives, tandis que le profil de l'extrémité de l'autre accouplement est arrondi.

18. Canal pour câbles selon les revendications 11 et 17, caractérisé en ce que la section transversale des rigoles de fond (58 et 59) est adaptée aux différentes géométries des accouplements antagonistes (32) du support (31).

19. Canal pour câbles selon la revendication 1, caractérisé en ce que la longueur efficace du support (31) est modifiable par sectionnement d'une ou plusieurs alvéoles.

20. Canal pour câbles selon la revendication 19, caractérisé en ce que les alvéoles du support (31) sont reliées via des points de cassure programmée ou des marques telles que des marques de découpage contre lesquel(les) appliquer un outil sectionneur.

21. Canal pour câbles selon les revendications 1 et 2, caractérisé en ce que le support (31) présente des dispositifs permettant de le protéger des déplacements latéraux.

22. Canal pour câbles selon revendication 21, caractérisé en ce que la protection antidéplacement latéral se compose de pièces à parois de liaison (80) disposées chacune entre une paroi (34) et le bras de liaison (37) d'un support (31) et contre lesquelles lors de l'accouplement de deux supports (31) les zones latérales des accouplements antagonistes (32) du deuxième support (31) viennent s'appliquer.
